(19) Europäisches Patentamt
European Patent Office
Office européen des brevets

(11) Publication number: 0 601 738 A1

# EUROPEAN PATENT APPLICATION

(21) Application number: 93309392.4

(22) Date of filing: 24.11.93

(51) Int. Cl.5: G06F 3/06

(30) Priority: 07.12.92 US 987036

(43) Date of publication of application:
15.06.94 Bulletin 94/24

(84) Designated Contracting States:
DE FR GB

(71) Applicant: International Business Machines
Corporation
Old Orchard Road
Armonk, N.Y. 10504(US)

(72) Inventor: Haskin, Roger Lee
5972 Porte Alegre Drive
San Jose, California 95120(US)
Inventor: Wyllie, James Christopher
18392 Chadbourne Lane
Monte Sereno, California 95030(US)

(74) Representative: Williams, Julian David
IBM United Kingdom Limited,
Intellectual Property Department,
Hursley Park
Winchester, Hampshire SO21 2JN (GB)

(54) Faster updating of data on parallel disks.

(57) A method to increase the rapidity with which a host computer can perform random write operations to a controller managing one or more disk storage devices. Blocks of data are known to the host by a fixed logical address, but are stored at a physical location on disk chosen at the discretion of the controller. Blocks of data written by the host are stored in buffers in the controller until a chosen number have been accumulated. The controller then selects a track on each of one or more disk storage devices and writes the buffered blocks to these tracks such that each track is written in one rotation of the disk and all disk storage devices are written to in parallel. The chosen number of blocks is KN, where K is the number of blocks in each track, and N is the number of disk storage devices. The controller maintains an indirect map to allow a block's physical location on disk to be determined from its fixed logical address. The indirect map is nonvolatile to prevent the loss of data in the event of a failure. An allocation map indicates which physical blocks are in use. Whenever the number of empty tracks that can be selected for writing drops below a threshold, the controller creates new empty tracks by transferring blocks to other locations.

FIG. 1

This invention relates to a method for increasing the rate at which write operations can be performed to update randomly selected blocks of data in one or more disk storage devices, and more particularly to a method in which updating of such data is deferred until a chosen number of logical blocks have been accumulated in buffers.

A paper entitled "A Case for Redundant Arrays of Inexpensive Disks (RAIDs)" by Patterson et al., published in June 1988 in the Proceedings of ACM Sigmod '88, at pp. 109-116, describes a so-called "Level 5 RAID" configuration. It notes that to update a single block of random access data in parallel storage devices, such as disk arrays, two blocks of data must be read -- the block to be written and its parity block -- and then the same two blocks must be rewritten.

Assuming K equal-length blocks on each track of a disk, one seek and $(3K+2)/2K$ rotations would be required on average to write one block. If writing of data and parity cannot be overlapped (in order to prevent common-mode failures), writing one block would require on average one seek and $(5K+2)/2K$ rotations. By contrast, in an $(N+1)$ parity implementation using N disk storage devices to store data plus one parity disk storage device, only one seek and one rotation would be necessary to write KN blocks sequentially.

There is a need for a method which allows random write operations to be completed in disk storage devices at a speed closer to that of sequential write operations.

In accordance with the present invention there is now provided a method for performing random write operations in disk storage devices, comprising the steps of: accumulating logical blocks of data that are to be updated in a plurality of buffers, each with a one-logical-block capacity; deferring updating of these logical blocks until a chosen number of the blocks have been accumulated; and writing said chosen number of logical blocks from the buffers into unused blocks on selected tracks of one or more disk storage devices sequentially as physical blocks in a series of successive write operations.

Viewing another aspect of the present invention, there is now provided apparatus for performing random write operations in disk storage devices. The apparatus comprising: means for accumulating logical blocks of data that are to be updated in a plurality of buffers, each with a one-logical-block capacity; means for deferring updating of these logical blocks until a chosen number of the blocks have been accumulated; and means for writing said chosen number of logical blocks from the buffers into unused blocks on selected tracks of one or more disk storage devices sequentially as physical blocks in a series of successive write operations.

In a preferred embodiment of the present invention, there is provided a method for increasing the rapidity with which a host computer can perform random write operations to a controller managing one or more disk storage devices. Blocks of data are known to the host by a fixed logical address, but are stored at a physical location on disk chosen at the discretion of the controller. Blocks of data written by the host are stored in buffers in the controller until a chosen number have been accumulated. The controller then selects a track on each of one or more disk storage devices and writes the buffered blocks to these tracks such that each track is written in one rotation of the disk and all disk storage devices are written to in parallel. The chosen number of blocks is KN, where K is the number of blocks in each track, and N is the number of disk storage devices.

The controller maintains an indirect map to allow a block's physical location on disk to be determined from its fixed logical address. The indirect map is nonvolatile to prevent the loss of data in the event of a failure. An allocation map indicates which physical blocks are in use.

Whenever the number of empty tracks that can be selected for writing drops below a threshold, the controller creates new empty tracks by transferring blocks to other locations.

On a single disk, the present invention enables K blocks to be written in a single revolution as compared with the $K(1/2+1/K)$ revolutions required for update in place. A RAID configuration of the present invention enables KN blocks to be written in a single revolution as compared with the $KN(5K+2)/2K$ revolutions required for update in place.

A preferred embodiment of the present invention will now be described with reference to the accompanying drawings in which:

Fig. 1 is a schematic diagram of a disk storage system of the present invention; and

Figs. 2-5 constitute "snapshots" showing the status and contents of the various components of the system of Fig. 1 as various steps to implement the invention are completed.

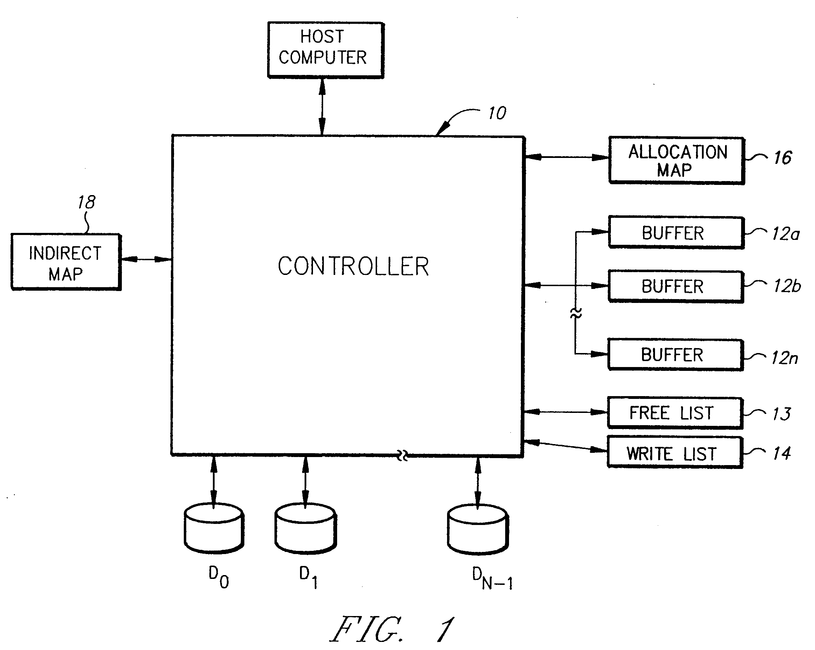

As illustrated in Fig. 1, a direct access storage system embodying the invention comprises a controller 10 and a plurality of volatile buffers 12a,12b,...,12n, each capable of storing one logical block of data. A volatile free list 13 lists the buffers that are currently not storing blocks; i.e., unused. A volatile write list 14 specifies the order in which the logical blocks of data in the respective buffers 12 are to be written by controller 10 as physical blocks on a plurality of disk storage devices D0 - D(N-1).

Controller 10 manages a volatile allocation map 16 constituting a table that describes the state of each physical block on the disk devices D0 - D(N-1) (i.e., whether or not the physical block contains a logical block). Controller 10 also manages a nonvolatile indirect map 18 that consists of a table that maps each logical block to the physical block that contains it. The volatile allocation map 16 is initialized during controller startup by scanning the indirect map 18, executing the program set forth in the Appendix hereto.

In addition, controller 10 allocates buffers as needed from free list 13, which enumerates those of the buffers 12a,...,12n which are unused. After controller 10 executes the process steps, hereinafter to be described, to write a logical block from an allocated (i.e., in-use) buffer to disk, the controller will return that specific buffer to free list 13.

Assume now that each disk of N disk devices D has M tracks, T0,...,T(M-1), and that tracks Ti on each disk of the devices D0,...,D(N-1) form a track group Gi. Assume also that each track T contains K physical blocks, and that Pd,t,k is the physical address of the kth physical block on track Tt of a disk on disk device Dd. Controller 10 can write all physical blocks Pd,t,k-0,...,Pd,t,k = K-1 in one write operation. Controller 10 can write to all N of the disk devices D0,...,D(N-1) in parallel. At least 2KN buffers are required to allow the disk devices D to be written at their full writing speed.

In operation, when the host requests that controller 10 write data into a logical block L, the controller deletes one of the buffers 12 from free list 13, stores the data in the buffer, and adds the buffer to the end of write list 14. Writing the data to disk is deferred until write list 14 contains a chosen number n of buffers, whereupon controller 10 scans allocation map 16 to select a track group G into which to write the data from the buffers. Note that chosen number n = KN, the number of physical blocks in each track group.

Controller 10 now writes the data in the first n buffers in write list 14 into the n unused physical blocks in the selected track group G. Next, for each of the n buffers, in the order in which they are listed in write list 14, the controller updates indirect map 18 to contain the logical block's new physical location, updates allocation map 16 to mark as allocated the physical block into which the logical block was written, and mark as unused the physical block that formerly contained that logical block, removes the buffer from write list 14, adds it to free list 13, and informs the host that the write operation has been completed.

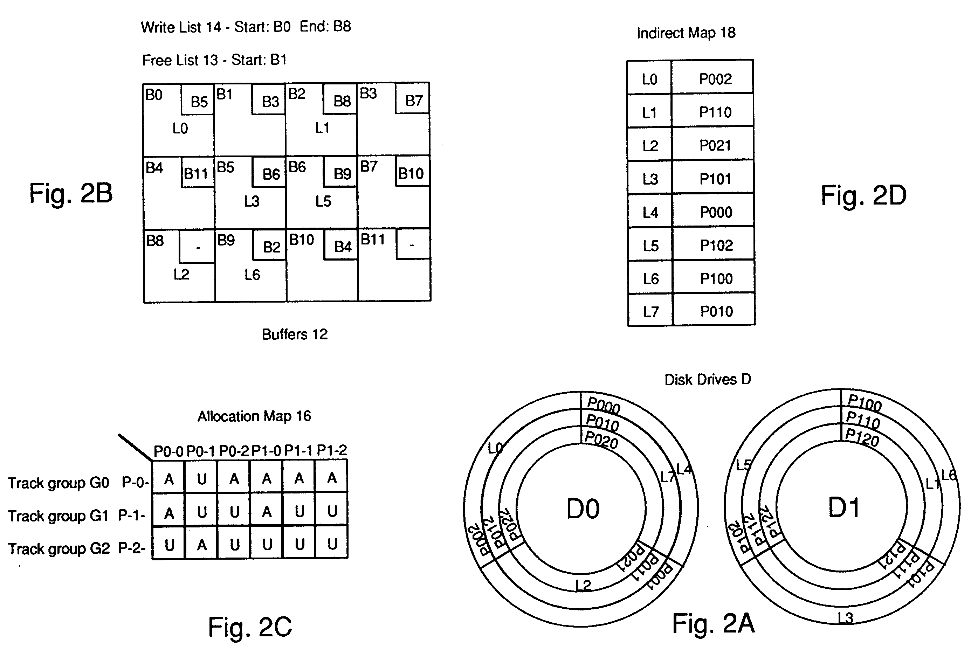

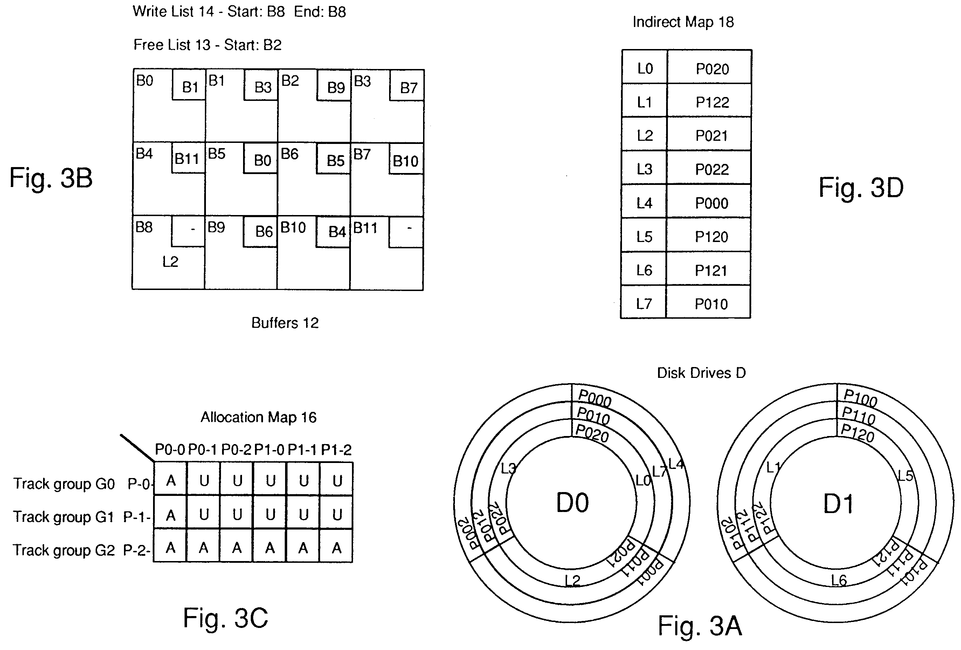

Figs. 2A-2D and 3A-3D show how the sequence of steps just described is implemented. Assume, for simplified illustration, that the controller includes twelve buffers 12, two disk storage devices D0, D1, each with three tracks and three physical blocks per track. Figs. 2A-2D constitute a snapshot of the states of the various components after six write operations have been initiated and before data is written from the buffers to disk.

Assume data is to be written in order to logical blocks L0, L3, L5, L6, L1, and L2. This data will have been accumulated in six of the buffers 12. More specifically, as shown in Fig. 2B, buffer B0 will contain data to be written to logical block L0 and will contain a pointer to buffer B5, the next buffer on write list 14. Similarly, buffer B5 will contain data to be written to logical block L3 and will point to buffer B6. Buffer B6 will contain data to be written to block L5, etc., finally pointing to buffer B8 which contains data to be written to the last logical block L2. Thus, data in the buffers are written to disk in the order they appear in write list 14, starting with buffer B0 and ending with buffer B8. Indirect map 18 lists the physical address of each block on disk. For example, map 18 shows that logical block L3 has a physical address P101, denoting that it resides on disk D1 in track T0 (the outermost track) in block 1 (the second of three blocks on the track). Allocation map 16 shows (by the "A" in the fifth column of the first row) that P101 is allocated; i.e., used to store a logical block. Map 16 shows by similar notation the state (A for allocated, and U for unused) of each of the other physical blocks. Each row of map 16 corresponds to a track group G; e.g., the row labelled P-1- includes the state of all physical blocks in track group G1 (i.e., P010, P011, P012, P110, P111, and P112).

Track group G2 (the emptiest track group) is selected for writing. As shown in Figs. 2A-2D, allocation map 16 indicates that this track group contains five unused blocks (P020, P022, P120, P121, and P122). Figs. 3A-3D show the states of the components after controller 10 has written L0 to P020, L3 to P022, etc. The selected tracks did not contain a sufficient number of unused blocks to allow writing logical block L2, so it remains in buffer B8 as the only element in write list 14. After writing the logical blocks, the controller has updated the indirect map 18 to contain the new physical locations of each of the logical blocks, has updated the allocation map 16 to indicate the new state of each physical block, and has returned buffers B0, B5, B6, B9, and B2 to the free list 13. For example, logical block L0 initially was stored in physical block P002 and was written to physical block P020. Fig. 3D shows that the indirect map 18 entry for L0 has been changed to P020, the state of P002 in the allocation map 16 has been updated to U, and the state of P020 in allocation map 16 has been updated to A.

Ideally, write operations are deferred until KN buffers are accumulated and a group of completely unused tracks is selected for writing. However, if response time constraints prevent deferring write operations until KN buffers are full or if no empty track groups exist, logical blocks can be written from buffers to any track group with at least one unused physical block.

Note that both the new and old versions of a logical block exist on disk before its entry in the nonvolatile indirect map 18 is updated. This ensures that if controller 10 ceases to operate (e.g., due to a power failure), the indirect map 18 will point to a valid version of the logical block (either the new one or the old one).

As earlier noted, each time a logical block is written, the physical block that formerly contained it becomes unused. Because of this, over time there will be fewer and fewer empty track groups. Since writing to partially-full track groups is slower than writing to empty track groups because fewer blocks are written per disk rotation, it is desirable to create new free track groups. This is done in the following manner: (1) For successive track groups that contain at least one unused

physical block, controller 10 reads all allocated physical blocks in the track group into buffers it obtains from free list 13.

(2) Controller 10 links each buffer filled in step (1) above (obtained from free list 13) to the start of the write list 14.

(3) When the write list 14 contains at least KN buffers, the controller writes data from the buffers to track groups as described in Section I above until the write list contains fewer than KN buffers.

(4) When a sufficient number of track groups have been emptied, the controller writes all buffers remaining in the write list, as described in Section I.

Assume now that the various components are in the states shown in Figs. 3A-3D. Since no free track groups exist, the steps described above will be executed to obtain one or more free track groups.

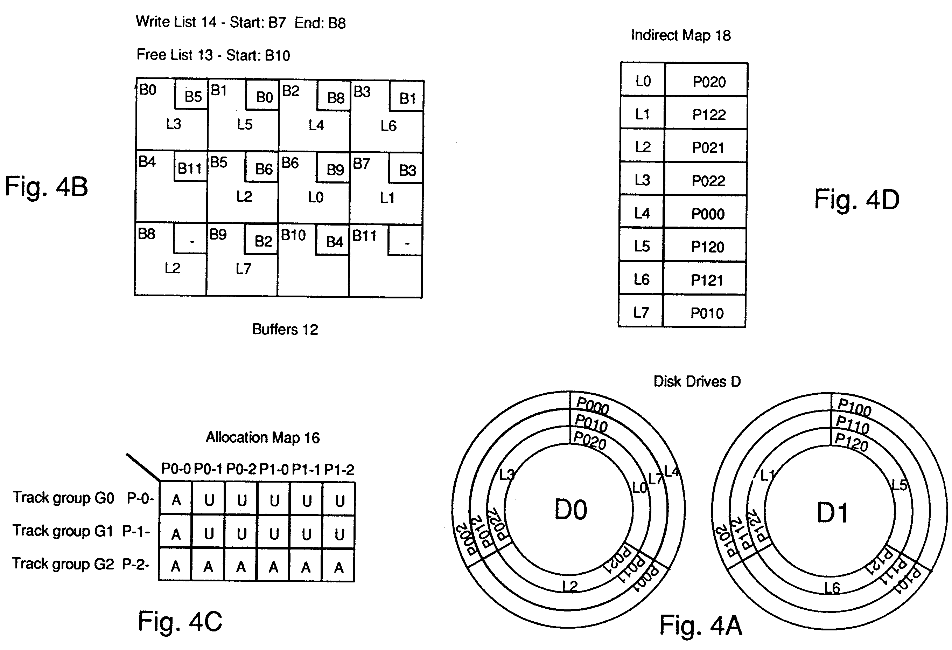

Figs. 4A-4D show the states of the various components after the allocated physical blocks in track groups G0, G1, and G2 have been read and appended to the start of the write list. In this example, all three track groups must be read before the write list contains KN blocks.

First, L4 is read from track group G0 into buffer B2 (obtained from the start of the free list, as shown in Fig. 3B), and B2 is appended to the start of the write list ahead of buffer B8 (which contains data that the host has requested to be written into L2). Next, L7 is read from track group G1 into B9 (similarly obtained from the free list), and B9 is appended to the start of the write list ahead of B2. Finally, L0, L2, L3, L5, L6, and L1 are read from track group G2 into B6, B5, B0, B1, B3, and B7, respectively (similarly obtained from the free list), and these buffers are appended to the start of the write list. As shown in Fig. 4B, the write list contains B7, B3, B1, B0, B5, B6, B9, B2, and B8 (in order), and the free list contains B10, B4, and B11. The disk storage devices (Fig. 4A), allocation map (Fig. 4C) and indirect map (Fig. 4D) are unchanged from Figs. 3A, 3C, and 3D, respectively.

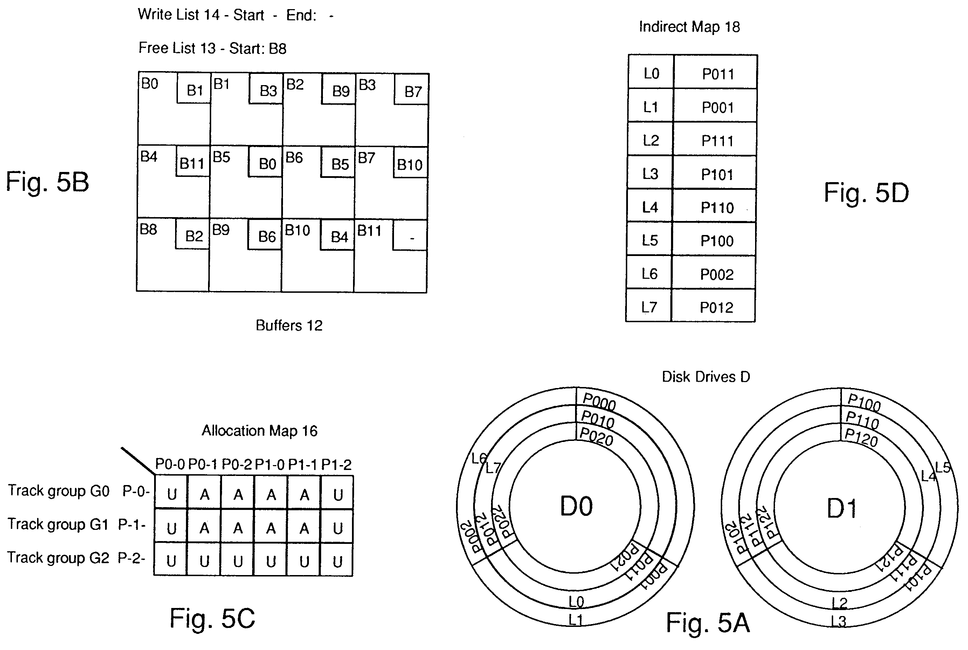

Figs. 5A-5D show the states of the various components after the write list 14 has been written to new physical locations as described in steps (3) and (4) above. This requires executing the method described in Section I twice: once to write L1, L6, L5, L3, and L2 to track group G0, and once to write L0, L7, L4, and the host's requested update to L2 to track group G1. As shown in Fig. 5C, track group G2 is now unused and free.

Empty track groups can thus be created to reclaim the space occupied by all used (i.e., freed) physical blocks whenever the number of empty track groups drops below a preselected threshold. If all track groups are scanned, all free blocks will be coalesced into empty track groups. If preferred, however, only enough track groups need be scanned until the number of empty track groups exceeds a selected threshold. The values chosen for the two thresholds are application specific. Also, if desired, instead of processing track groups in order, they may be processed in an order determined according to the number of free blocks they contain; i.e., process those groups first that contain the greatest number of free blocks.

Note that, as specified in paragraph (2) above, each buffer that contains a logical block is added to the start of the buffer list 14. This prevents a deferred user write request from overwriting a logical block with its old contents. To prevent space reclamation from adding unduly to the response time of requests from the host, only a limited number of track groups are processed at a time; i.e., until the number of empty track groups is raised above a predetermined threshold.

An Appendix to this description sets forth pseudocode by which the invention can be implemented.

The steps described in Sections I and II above can be extended to disk arrays using parity blocks by modifying the steps described in Section I to write only to completely empty track groups G (which would provide a best-case example). For example, for a Level 5 RAID, instead of writing KN logical blocks at a time, K(N-1) logical blocks are written in each track group, with parity data computed from the K(N-1) logical blocks being written into the remaining K physical blocks. For a Level 5 RAID configuration in a selected track group, the parity blocks are stored on a track of a disk (mod N). None of the blocks over which parity blocks are computed will be rewritten until all physical blocks in the selected track group have been deallocated. Thus, the contents of a physical block can be recreated from the other blocks in its parity group even though some of those blocks may have been marked U (i.e., deallocated) in the allocation map 16. Parity blocks themselves do not need to be represented in the allocation map, because a parity block remains in use as long as any of the blocks in its parity group are allocated.

It should be noted that the controller 10 can be either a disk controller or host computer (i.e., a paging system or buffer manager of an operating system, a data base system, or a disk file system). In the latter case, the volatile buffers would be those of the buffer manager.

Moreover, the invention is particularly applicable to modern online transaction processing systems which use write-ahead logging and deferred updates to secondary storage. Rather than writing updates to disk during the transaction itself, the updates would be made in volatile memory buffers and written from the buffers at some later time. This will allow deferring write operations until a large number of updated buffers are available to be written, and thus enable maximum advantage to be achieved with this invention.

While the invention has been implemented by way of illustration in the manner above described, it should be noted that the following modifications may be made, if desired:

(1) In applications where it may be unacceptable to defer write operations until $n = KN$ unwritten blocks are accumulated, $n < KN$ blocks could be written (e.g., to a partially full track group) in response to an appropriate command from the host.

(2) The volatile buffers can be replaced with nonvolatile buffers. In such event, the host would be notified of completion of the write operations as soon as updated blocks are stable in nonvolatile memory, rather than at the end of the writing step, and writing would occur after KN logical blocks have been accumulated in the nonvolatile buffers.

(3) The indirect map can be implemented with nonvolatile random access memory or with any of a variety of well-known techniques (e.g., stable storage or write-ahead logging, such as described in an article by J. N. Gray entitled "Notes on Database Operating Systems", in R. Bayer et al., editors, "Operating Systems: An Advanced Course, Springer-Verlag, 1979, pp. 393-481). The basic requirement is that the user not be told that a write operation is complete until the data is actually written to the new physical block and the indirect map has been updated in nonvolatile storage.

TABLE 1

```
/* The following definitions correspond to the number
 * of logical blocks, disks, tracks, blocks per track, etc. shown
 * in the figures. They would change to reflect the characteristics
 * of the disk drives attached to the controller in a real system.
 */

#define B 8   /* number of logical blocks stored in disk group */
#define N 2   /* number of disks in disk group */
#define M 3   /* number of tracks on a disk */
#define K 3   /* number of blocks in a track */
#define LO 6  /* Free space when <= 1/LO track groups empty */
#define HI 3  /* Free space until >= 1/HI track groups empty */
#define  EMPTYTRACKGROUPLOTHRESHOLD ((((N*M*K)-B)/(N*K))/LO)
#define  EMPTYTRACKGROUPHITHRESHOLD ((((N*M*K)-B)/(N*K))/HI)
#define BLKSIZE 512 /* size in bytes of a logical block */
#define ALLOCATED 1 /* in allocation map, block allocated */
#define FREE 0      /* in allocation map, block not allocated */
#define NULL 0
struct bufstr {
  struct bufstr *nextP;
  long lblock;
  int isclientrequest;
  char data[BLKSIZE];
};

/* ************* STATIC VARIABLES *************** */

/* Every entry represents a logical block and contains
 * the address of the physical block in which the logical block
 * is stored. This table is located in nonvolatile memory */
extern struct indtblstr {
  int disk;
  int track;
  int block;
} IndirectMap[B];

/* Every entry contains the allocated/free state of a physical block */
static char AllocationMap[N, M, K];

/* Every entry contains a buffer and its control information */
static struct bufstr bufstr_array[2*N*K];

static int nbufsinlist;
static int nemptytrackgroups;
static int startingtrack;
static struct bufstr *writelistheadP;
static struct bufstr *writelisttailP;
static struct bufstr *freelistheadP;


/* ************* IMPLEMENTATION OF SECTION I *************** */

/* Write buffers from the write list into a track group. */

WriteBuffers()

{
  int j;
  int empty_count;
  int bufs_to_write;
  int emptiest_group, emptiest_count;
  int disk, track, block;
  struct {
    int disk;
    int block;
  } PhysBlkArray[N*K];
```

```
struct bufstr *writelistelemP;

/* Find the first track group with enough empty blocks for the
 * entire buffer list, or a completely empty track group, or
 * the emptiest track group. */
emptiest_count = 0;
emptiest_group=0;
for (track=0; track<M; track++) {
  empty_count = 0;
  for (disk=0; disk<N; disk++) {
    for (block=0; block<K; block++) {
      if (AllocationMap[disk, track, block] == FREE) {
        /* count empty block, keep a list of them for later */
        PhysBlkArray[empty_count].disk = disk;
        PhysBlkArray[empty_count].block = block;
        empty_count += 1;
      }
    }
  }
  if (empty_count > emptiest_count) {
    emptiest_count = empty_count;
    emptiest_group = track;
  }
  if (empty_count >= nbufsinlist || empty_count == K*N) break;
}

empty_count = emptiest_count;
track = emptiest_group;


/* write as many buffers as will fit into empty blocks
 * in the selected track group */
if (empty_count == N*K) nemptytrackgroups -= 1; /* was empty, not now */
bufs_to_write = (nbufsinlist<empty_count?nbufsinlist:empty_count);
writelistelemP = writelistheadP;
for (j=0; j<bufs_to_write; j++) {
  build_write_command(PhysBlkArray[j].disk,
                      track,
                      PhysBlkArray[j].block,
                      writelistelemP->data,
                      BLKSIZE);
  writelistelemP = writelistelemP->nextP;
}
execute_write_commands_in_parallel();

writelistelemP = writelistheadP;
for (j=0; j<bufs_to_write; j++) {

  /* Free physical block pointed to by indirect map entry */
  AllocationMap[IndirectMap[writelistelemP->lblock].disk,
               IndirectMap[writelistelemP->lblock].track,
               IndirectMap[writelistelemP->lblock].block] = FREE;

  /* Update indirect map entry */
  IndirectMap[writelistelemP->lblock].disk = PhysBlkArray[j].disk;
  IndirectMap[writelistelemP->lblock].track = track;
  IndirectMap[writelistelemP->lblock].block = PhysBlkArray[j].block;

  /* Allocate physical block now pointed to by indirect map entry */
  AllocationMap[IndirectMap[writelistelemP->lblock].disk,
               IndirectMap[writelistelemP->lblock].track,
               IndirectMap[writelistelemP->lblock].block] = ALLOCATED;

  /* If client request, respond */
  if (writelistelemP->isclientrequest)
    tell_client_write_complete(writelistelemP->lblock);
```

```
    /* Free buffer */
    writelistheadP = writelistelemP->nextP;
    writelistelemP->nextP = freelistheadP;
    freelistheadP = writelistelemP;
    nbufsinlist -= 1;
    if (nbufsinlist == 0) writelisttailP = NULL;
  }

}

/* *************** IMPLEMENTATION OF SECTION II *************** */

/* Starting where we left off, compress to bring number of empty track
 * groups up to EMPTYTRACKGROUPHITHRESHOLD. */

MakeEmptyTrackGroups()

{
  int disk, track, block;
  int notfull;
  struct bufstr *writelistelemP;
  int nEmptiedTrackGroups;

  nEmptiedTrackGroups = 0;
  while (nemptytrackgroups + nEmptiedTrackGroups
          < EMPTYTRACKGROUPHITHRESHOLD) {
    /* find if track has empty space to reclaim */
    for (disk = 0, notfull = 0; disk < N; disk++) {
      for (block=0; block<K; block++) {
        if (notfull = (AllocationMap[disk, startingtrack, block]
                        == FREE)) break;
      }
      if (notfull) break;
    }
    if (notfull) {

      /* read into buffers and append to start of buffer list */
      for (disk=0; disk<N; disk++) {
        for (block=0; block<K; block++) {
          if (AllocationMap[disk, startingtrack, block] == ALLOCATED) {
            /* get a buffer, link to START of buffer list */
            writelistelemP = freelistheadP;
            freelistheadP = writelistelemP->nextP;
            writelistelemP->nextP = writelistheadP;
            writelistheadP = writelistelemP;
            writelistelemP->isclientrequest = 0;

            if (nbufsinlist == 0) writelisttailP = writelistelemP;
            nbufsinlist += 1;

            /* build command to read free block into it */
            build_read_command(disk,
                               startingtrack,
                               block,
                               writelistelemP->data,
                               BLKSIZE);
          }
        }
      }
      execute_read_commands_in_parallel();

      /* if we have enough buffers, write them out */
      while (nbufsinlist >= K*N) WriteBuffers();
    }
    startingtrack = (startingtrack+1) % M;
    nFreedTrackGroups += 1;
```

```
                              )

    /* Write residual blocks */
    while (nbufsinlist != 0) WriteBuffers();
    nemptytrackgroups += nFreedTrackGroups;
}

/* ************** CONTROLLER STARTUP AND MAIN LOOP ************** */

/* Sequence of operations executed by the controller to recover,
 * append host write requests to the write list, write buffers
 * in the write list to disk, and periodically make free track
 * groups. */

main()

{
    int i;
    int lblock;
    int empty;
    int disk, track, block;

    struct bufstr *writelistelemP;

    /* init buffer list to empty */
    writelistheadP = NULL;
    writelisttailP = NULL;
    nbufsinlist=0;

    /* init free buffer list */
    freelistheadP = NULL;
    for (i=0; i<sizeof(bufstr_array)/sizeof(struct bufstr); i++) {
      bufstr_array[i].nextP = freelistheadP;
      freelistheadP = &bufstr_array[i];
    }

    /* recover allocation map from indirect map */
    for (track=0; track<M; track++) {
      for (disk=0; disk<N; disk++) {
        for (block=0; block<K; block++) {
          AllocationMap[disk, track, block] = FREE;
        }
      }
    }
    for (lblock = 0; lblock < B; lblock++) {
        AllocationMap[IndirectMap[lblock].disk,
                      IndirectMap[lblock].track,
                      IndirectMap[lblock].block] = ALLOCATED;
    }

    /* init scan track, # empty track groups. */
    startingtrack = 0;
    nemptytrackgroups = 0;
    for (track=0; track<M; track++) {
      empty = 1;
      for (disk=0; disk<N; disk++) {
        for (block=0; block<K; block++) {
          if (AllocationMap[disk, track, block] != FREE) {
            empty = 0;
            break;
          }
        }
        if (!empty) break;
      }
      if (empty) nemptytrackgroups += 1;
    }
```

9

```
/* Loop to process client requests */
while(1) {

  /* Free up space as needed */
  while (nemptytrackgroups < EMPTYTRACKGROUPLOTHRESHOLD) {
    MakeEmptyTrackGroups();
  }

  /* get a buffer */
  writelistelemP = freelistheadP;
  freelistheadP = writelistelemP->nextP;

  /* get next client write request */
  receive_client_request(lblock, writelistelemP->data);
  writelistelemP->isclientrequest = 1;
  writelistelemP->lblock = lblock;

  /* link to END of buffer list */
  writelistelemP->nextP = NULL;
  if (writelisttailP != NULL) {
    writelisttailP->nextP = writelistelemP;
  } else {
    writelistheadP = writelistelemP;
  }
  writelisttailP = writelistelemP;
  nbufsinlist += 1;

  /* if enough buffers accumulated, write them out */
  while (nbufsinlist >= K*N) WriteBuffers();
}
}
```

## Claims

1. A method for performing random write operations in disk storage devices, comprising the steps of: accumulating logical blocks of data that are to be updated in a plurality of buffers, each with a one-logical-block capacity; deferring updating of these logical blocks until a chosen number of the blocks have been accumulated; and writing said chosen number of logical blocks from the buffers into unused blocks on selected tracks of one or more disk storage devices sequentially as physical blocks in a series of successive write operations.

2. A method as claimed in claim 1, wherein during the writing step the blocks are written in parallel to a plurality of disk storage devices.

3. A method as claimed in claim 1, wherein the chosen number of blocks is n, where n = KN, K is the number of equal-length blocks in each track, N is the number of disk storage devices, and all of the K blocks are unused.

4. A method as claimed in claim 1, wherein the chosen number of blocks is n, where n < KN, K is the number of equal-length blocks in each track, N is the number of disk storage devices, and less than all of the K blocks are unused.

5. A method as claimed in claim 1, including the step, after said writing step, of: updating a nonvolatile indirect map which maps each of the logical blocks to a corresponding physical block for preventing the loss of data in the event of a preselected condition.

6. A method as claimed in claim 1, including the step of: maintaining a list of the order in which the accumulated logical blocks are to be written from the buffers to the disk storage devices as physical blocks.

7. A method as claimed in claim 1, including the steps of: providing an indirect map which maps each of the accumulated blocks to a corresponding physical block; providing an allocation map which identifies each unused physical block; and after the writing step, indicating in the allocation map, for each logical block that was written, that the physical block in which that logical block resided before the writing step is now unused, and indicating that the physical block into which the logical block was written during the writing step is no longer unused.

8. The method as claimed in claim 1, wherein the chosen number is the number of physical blocks on the selected tracks.

9. A method as claimed in claim 1, including the step of:
transferring logical blocks from respective physical blocks on one or more of the disk storage devices to other physical blocks to create sequences of unused physical blocks on selectable tracks of said devices into which logical blocks can be sequentially written at a later time.

10. A method as claimed in claim 9, including the step of: maintaining a volatile allocation map which indicates which of the physical blocks is unused.

11. A method as claimed in claim 9, including, during the transferring step: transferring the logical blocks from groups of tracks in sequences determined by the number of unused blocks contained in the respective group of tracks.

12. A method as claimed in claim 9, wherein said transferring step is executed whenever the number of unused physical blocks drops below a preselected threshold for coalescing unused blocks into groups of unused blocks.

13. Apparatus for performing random write operations in disk storage devices. The apparatus comprising: means for accumulating logical blocks of data that are to be updated in a plurality of buffers, each with a one-logical-block capacity; means for deferring updating of these logical blocks until a chosen number of the blocks have been accumulated; and means for writing said chosen number of logical blocks from the buffers into unused blocks on selected tracks of one or more disk storage devices sequentially as physical blocks in a series of successive write operations.

FIG. 1

EP 0 601 738 A1

Write List 14 - Start: B0   End: B8

Free List 13 - Start: B1

**Fig. 2B**

Buffers 12

| | | | | | |
|---|---|---|---|---|---|
| B0 | B5 | B1 | B3 | B2 | B8 | B3 | B7 |
| | L0 | | L1 | | |
| B4 | B11 | B5 | B6 | B6 | B9 | B7 | B10 |
| | L3 | | L5 | | |
| B8 | - | B9 | B10 | B2 | B4 | B11 | - |
| | L2 | | L6 | | |

Allocation Map 16

| | P0-0 | P0-1 | P0-2 | P1-0 | P1-1 | P1-2 |
|---|---|---|---|---|---|---|
| Track group G0  P-0- | A | A | A | A | A | A |
| Track group G1  P-1- | A | U | U | A | U | U |
| Track group G2  P-2- | U | A | A | U | U | U |

**Fig. 2C**

Indirect Map 18

| | |
|---|---|
| L0 | P002 |
| L1 | P110 |
| L2 | P021 |
| L3 | P101 |
| L4 | P000 |
| L5 | P102 |
| L6 | P100 |
| L7 | P010 |

**Fig. 2D**

Disk Drives D

D0 — P000 P010 P020 / P001 P011 P021 / P002 P012 P022 / L0 L1 L2 L4 L7

D1 — P100 P110 P120 / P101 P111 P121 / P102 P112 P122 / L3 L5 L6

**Fig. 2A**

## Fig. 3A

Disk Drives D

D0 — P000, P010, P020, P001, P011, P021, P002, P012, P022, L0, L4, L7, L2, L3

D1 — P100, P110, P120, P101, P111, P121, P102, P112, P122, L5, L6, L1

## Fig. 3B

Write List 14 - Start: B8   End: B8

Free List 13 - Start: B2

| B0 | B1 | B1 | B3 | B2 | B9 | B3 | B7 |
| B4 | B11 | B5 | B0 | B6 | B5 | B7 | B10 |
| B8 | - | B9 | B6 | B10 | B4 | B11 | - |

L2

Buffers 12

## Fig. 3C

Allocation Map 16

| | P0-0 | P0-1 | P0-2 | P1-0 | P1-1 | P1-2 |
|---|---|---|---|---|---|---|
| Track group G0  P-0- | A | U | U | U | U | U |
| Track group G1  P-1- | A | U | U | U | U | U |
| Track group G2  P-2- | A | A | A | A | A | A |

## Fig. 3D

Indirect Map 18

| L0 | P020 |
| L1 | P122 |
| L2 | P021 |
| L3 | P022 |
| L4 | P000 |
| L5 | P120 |
| L6 | P121 |
| L7 | P010 |

14

Write List 14 - Start: B7 End: B8

Free List 13 - Start: B10

## Fig. 4B

| | | | | | | | |
|---|---|---|---|---|---|---|---|
| B0 | B5 | B1 | B0 | B2 | B8 | B3 | B1 |
| L3 | | L5 | | L4 | | L6 | |
| B4 | B11 | B5 | B6 | B6 | B9 | B7 | B3 |
| | | L2 | | L0 | | L1 | |
| B8 | - | B9 | B2 | B10 | B4 | B11 | - |
| L2 | | L7 | | | | | |

Buffers 12

## Indirect Map 18

| L0 | P020 |
|----|------|
| L1 | P122 |
| L2 | P021 |
| L3 | P022 |
| L4 | P000 |
| L5 | P120 |
| L6 | P121 |
| L7 | P010 |

## Fig. 4D

## Allocation Map 16

| | P0-0 | P0-1 | P0-2 | P1-0 | P1-1 | P1-2 |
|---|------|------|------|------|------|------|
| Track group G0 P-0- | A | U | U | U | U | U |
| Track group G1 P-1- | A | U | U | U | U | U |
| Track group G2 P-2- | A | A | A | A | A | A |

## Fig. 4C

Disk Drives D

Fig. 4A

EP 0 601 738 A1

EP 0 601 738 A1

Write List 14 - Start - End: -

Free List 13 - Start: B8

| B0 | B1 | B1 | B3 | B2 | B9 | B3 | B7 |
|----|----|----|----|----|----|----|----|
| B4 | B11 | B5 | B0 | B6 | B5 | B7 | B10 |
| B8 | B2 | B9 | B6 | B10 | B4 | B11 | - |

Buffers 12

## Fig. 5B

### Indirect Map 18

| L0 | P011 |
|----|------|
| L1 | P001 |
| L2 | P111 |
| L3 | P101 |
| L4 | P110 |
| L5 | P100 |
| L6 | P002 |
| L7 | P012 |

## Fig. 5D

### Allocation Map 16

|  | P0-0 | P0-1 | P0-2 | P1-0 | P1-1 | P1-2 |
|--|------|------|------|------|------|------|
| Track group G0 P-0- | U | A | A | A | A | U |
| Track group G1 P-1- | U | A | A | A | A | U |
| Track group G2 P-2- | U | U | U | U | U | U |

## Fig. 5C

### Disk Drives D

P000
P010
P020
P002
P012
P022
P001
P011
P021
L6
L7
D0
L0
L1

P100
P110
P120
P102
P112
P122
P101
P111
P121
L4
L5
D1
L2
L3

## Fig. 5A

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| E | US-A-5 276 840 (ACER INC.)<br>* column 4, line 20 - column 5, line 54; figures 1,4,5 * | 1,6,7,13 | G06F3/06 |
| X | EP-A-0 341 036 (IBM)<br>* page 2, column 1, line 1 - column 2, line 57; figures 3,4 * | 1,13 | |
| A | EP-A-0 116 366 (HITACHI)<br>* page 1, line 1 - page 2, line 24 * | 9 | |
| A | WO-A-90 06550 (CRAY)<br>* page 3, line 17 - page 4, line 12 * | 2-4 | |

**TECHNICAL FIELDS SEARCHED** (Int.Cl.5)

G06F

The present search report has been drawn up for all claims

| Place of search | Date of completion of the search | Examiner |
|---|---|---|
| THE HAGUE | 25 March 1994 | Gill, S |